# EUROPEAN PATENT SPECIFICATION

(11) **EP 2 432 667 B1**
(45) Date of publication and mention of the grant of the patent: **24.07.2013**
(21) Application number: 10727971.3
(22) Date of filing: 27.04.2010
(51) Int. Cl.: B60T 3/00

(54) **GRIP WEDGE FOR MOTOR VEHICLES**
GRIFFKEIL FÜR MOTORFAHRZEUGE
COIN D'ATTACHE POUR VÉHICULES MOTORISÉS

(30) Priority: 22.05.2009 IT TO20090392
(43) Date of publication of application: 28.03.2012
(73) Proprietor: Rolfo S.p.A., 12042 Bra (CN) (IT)
(72) Inventor: ARNULFO, Elio, 12042 Bra (CN) (IT)
(74) Representative: Garavelli, Paolo
(86) International application number: PCT/IT2010/000181
(87) International publication number: WO 2010/134109

(56) References cited:
- EP-A1- 0 025 399
- WO-A1-93/16897
- US-A1- 2008 128 220
- US-A1- 2009 035 088

## Description

The present invention refers to a grip wedge for motor vehicles transported on trucks or trailers.

As known, vehicles loaded and transported on trucks or trailers are normally fastened to loading planes or gangways through two stop systems. The first one of such systems operates as stop for the vehicle wheel rolling and can be composed of a moving element secured to the gangways themselves in multiple positions, depending on where the wheel to be blocked is, using the holes with which plates composing the gangways are equipped, or made with fixed elements or by creating an opening in the gangway to allow the vehicle wheel to be housed therein and preventing its movement.

The second one of such systems is made of a flexible ribbon that is wound around the vehicle tire tread, and is anchored and tensioned by suitable hooks or crooks and jacks with manual ratchet gears anchored to the same holes of the gangway plates. Wedges are fastened to gangways through the use of hooks of the wedge itself, that are inserted into the holes of the plates composing the gangways and suitably rotated to obtain the anchoring. The anchorings or hooks are normally two and one of them can be fixed: in this case, to allow inserting the hook into the hole and its following anchoring, it is necessary to perform a rotation of the wedge on a plane parallel and orthogonal to the plate. This solution has the advantage of having a single closing mechanism to actuate, but the rotation that it is necessary to impose to the wedge to allow the fixed hook to be fastened/unfastened to/from the gangway can be difficult, given the scarce space available around the vehicle wheel, and given the distance from the tire that has to be reduced as much as possible.

In other cases, anchorings or hooks can both be mobile and rotate around one axis that can be differently rotated in space. This solution allows a greater freedom of movement and an easier insertion/removal into/from holes, but the two closing mechanisms must be actuated differently. Moreover, the mechanism that is placed towards the vehicle axis can be accessed with difficulty, since it is mostly below the vehicle itself. WO-A1-93/16897 discloses a grip wedge according to the preamble of claim 1.

Therefore, object of the present invention is solving the above prior art problems, by providing a grip wedge for motor vehicles equipped with quick hooking/unhooking means that can be actuated by means of a single movement that, tough keeping reliability, sturdiness and cheapness similar to those of prior art wedges, is of a more practical and economic use.

The above and other objects and advantages of the invention, as will result from the following description, are obtained with a grip wedge for motor vehicles as described in Claim 1. Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the invention, as claimed in the dependent claims.

The present invention will be better described by some preferred embodiments thereof, provided as a non-limiting example, with reference to the enclosed drawings, in which:

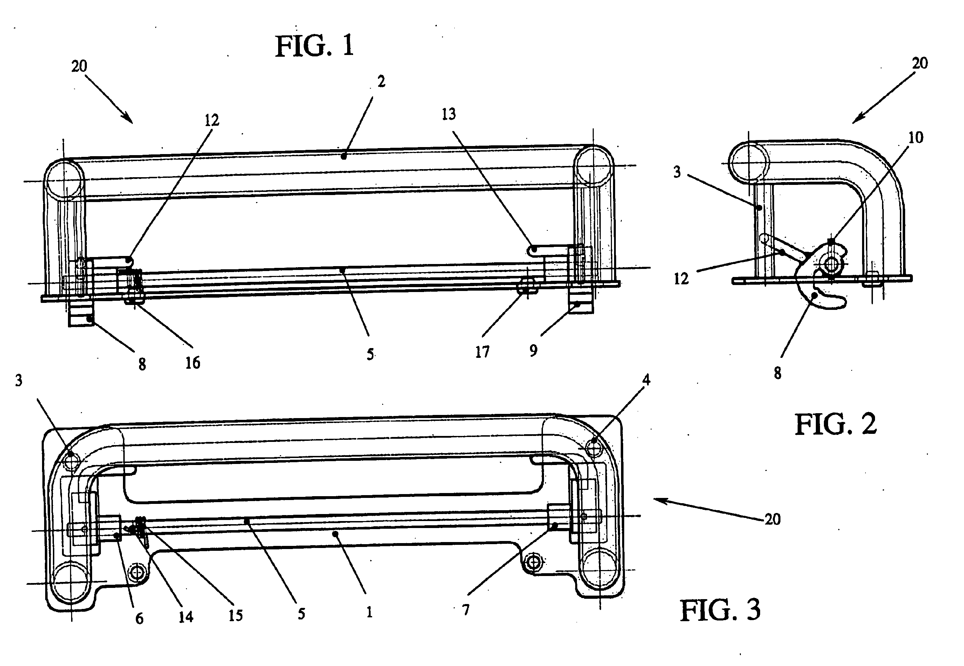

- FIG. 1 shows a front view of a preferred embodiment of the grip wedge for motor vehicles according to the present invention;
- FIG. 2 shows a side view of the grip wedge for motor vehicles of FIG. 1;
- FIG. 3 shows a top view of the grip wedge for motor vehicles of FIG. 1;

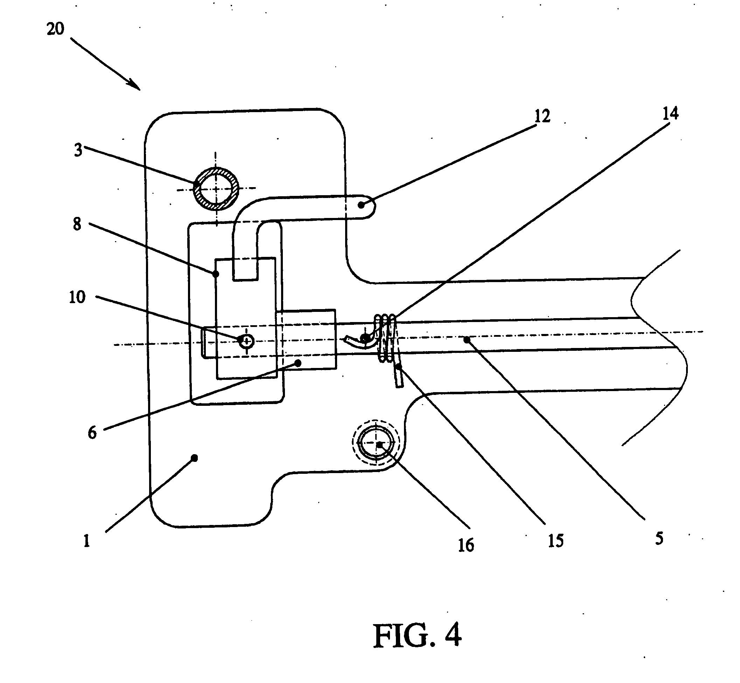

- FIG. 4 shows a partial, enlarged top view of the grip wedge for motor vehicles of FIG. 3;
- FIG. 5 shows a side view of the grip wedge for motor vehicles according to the present invention in an operating position thereof; and
- FIG. 6 shows a side view of the grip wedge for motor vehicles according to the present invention in another operating position thereof.

With reference in particular to the Figures, it is possible to note that the stop wedge 20 for motor vehicles according to the present invention, transported on trucks or trailers, is composed of at least one basic structure 1 on which an abutment 2 is fastened, preferably made as a suitably folded tubular portion, that operates as stop of a motor vehicle wheel 30 and is advantageously equipped with quick hooking/unhooking means to a loading plane or gangway 40 of such truck or trailer, such quick hooking/unhooking means being adapted to be actuated through a single movement.

Obviously, in order to make the wedge more resistant, it is possible to connect the basic structure 1 to the abutment 2 by interposing suitable reinforcements 3, 4.

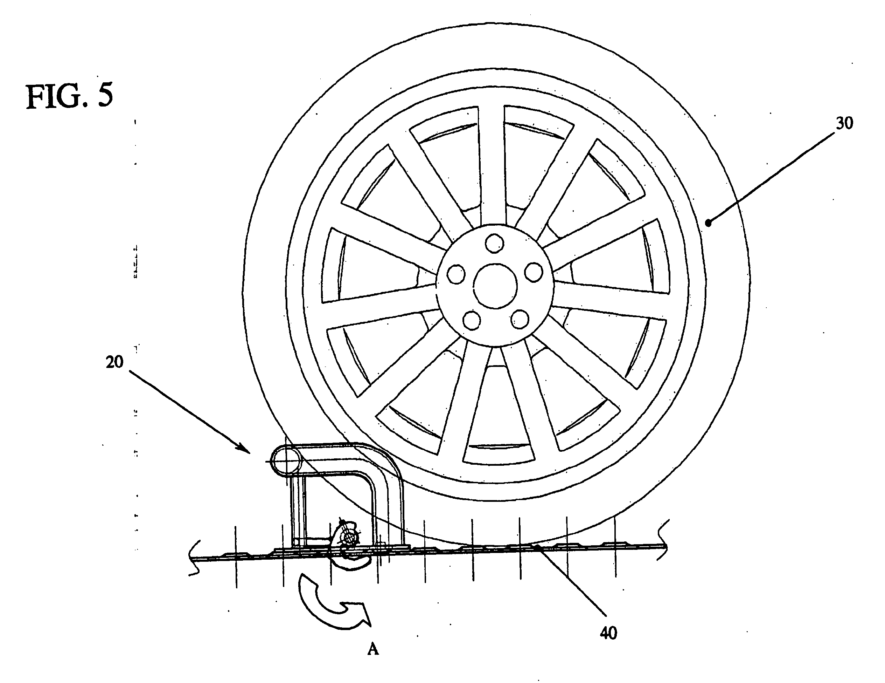

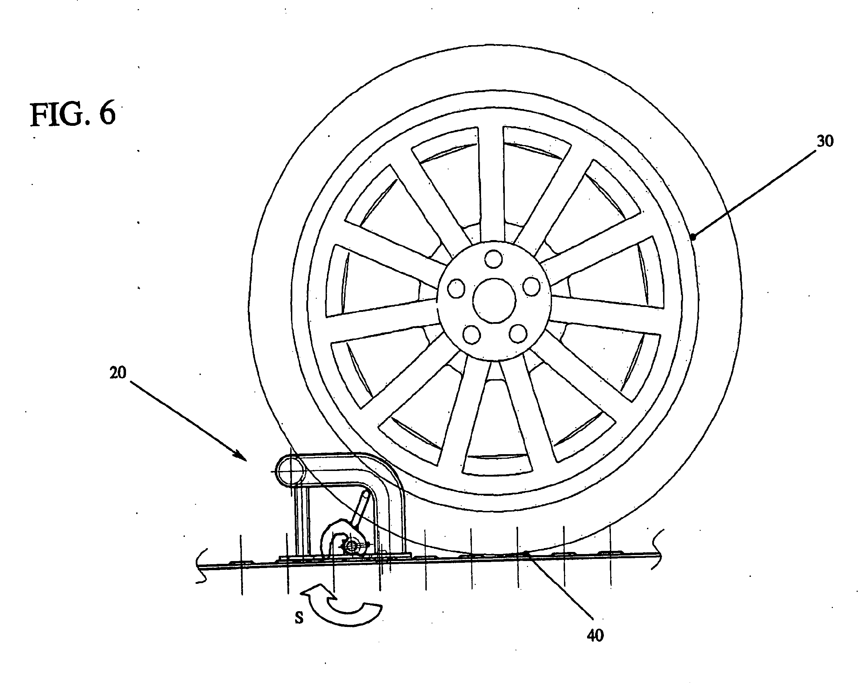

The quick hooking/unhooking means of the wedge 20 according to the present invention are composed of ratchet gear means, comprising at least two hooks 8, 9, each one of which has an external outline adapted to allow its hooking/unhooking movement with a rotation around a hooking/unhooking rotation axis parallel to the axis of the wheel 30 to be fastened, such hooks 8, 9 being arranged along the same hooking/unhooking rotation axis in order to be simultaneously driven through such only movement by rotating around such hooking/unhooking rotation axis along a hooking direction (according to the direction shown, for example, by arrow A in FIG. 5) and an unhooking direction (according to the direction shown, for example, by arrow S in FIG. 6) opposite to such hooking direction: in particular, as can be noted from FIG. 5, the shape of the external outline of each hook 8, 9 is made in such a way that the forces exerted by the wheel 30 on the abutment 2 to which it is subjected, tend to rotate each hook 8, 9 around the hooking/unhooking rotation axis along the hooking direction, increasing the tightening on the gangway 40.

The hooks 8 and 9 are keyed-in on at least one rotating shaft 5 coaxial with the hooking/unhooking rotation axis, on which they are kept integral and synchronous through, for example, some pegs, respectively 10 and 11, or equivalent fastening means. The rotating shaft 5 is then connected and supported on the basic structure 1 in its two opposite ends by a respective support 6 and 7, that allows its rotation around the hooking/unhooking rotation axis as single degree of freedom.

Each hook 8, 9 is preferably equipped with a related actuating handle, respectively 12 and 13, adapted to make it easier to perform the rotation of the rotating shaft 5, and consequently of the hooks 8, 9, around the hooking/unhooking rotation axis along the unhooking direction S to allow removing the wedge 20 from the loading plane or gangway 40: advantageously, the wedge 20 is equipped with two handles 12, 13 to open the hooks 8, 9 in such a way that the wedge 20 itself is made symmetrical and its use can be indifferently made on both sides of the truck or trailer, actuating every time the most suitable and better accessible actuating handle 12 or 13.

In order to guarantee that the wedge 20 normally keeps its hooking position (like the one shown, for example, in FIG. 5), the rotating shaft 5 can cooperate with the basic structure 1 by interposing elastic means loaded with elastic energy when the rotating shaft 5 is rotated around the hooking/unhooking rotation axis along the unhooking direction S, and tending to discharge such energy when the rotating shaft 5 rotates around the hooking/unhooking rotation axis along the hooking direction A: preferably, such elastic means are made as at least one torsion spring 15 arranged coaxially to the rotating shaft 5, having a first end fastened to such shaft 5, while for example a suitable fastening abutment 14 and a second end secured to the basic structure 1. Possibly, in order to limit vibrations and rattling, the wedge 20 can be equipped with elastic, rubber anti-vibration elements, preferably made as two or more anti-vibration small blocks 16, 17, interposed between the basic structure 1 and the loading plane or gangway 40.

As clearly results from the above description, the use of the wedge 20 according to the present invention by an operator is particularly easy, being it able to be grasped and simultaneously opened with a single hand and a single movement, greatly increasing its use comfort and safety.

## Claims

1. Grip wedge (20) for vehicles on trucks or trailers, composed of at least one base structure (1) on which one abutment (2) for stopping one wheel (30) of said vehicle is fixed, said wedge (20) being provided with quick hooking/unhooking means to a loading platform or gangway (40) of the trailer, said quick hooking/unhooking means being adapted to be driven through a single movement of a single hand, said quick hooking/unhooking means being composed of ratchet gear means comprising at least two hooks (8, 9) arranged along a same hooking/unhooking rotation axis parallel to an axis of said wheel (30) to be simultaneously driven with said single movement of a single hand, by rotating around said hooking/unhooking rotation axis according to a hooking direction (A) and to an unhooking direction (S) opposed to said hooking direction (A), said hooks (8, 9) being fixed on at least one rotating shaft (5) coaxial with said hooking/unhooking rotation axis, **characterised in that**:
- said rotating shaft (5) is connected and supported on said base structure (1) at its two opposed ends by a respective support (6, 7) adapted to allow a rotation of said rotating shaft (5) around said hooking/unhooking rotation axis;
- each of said hooks (8, 9) is provided with an external profile adapted to allow a hooking/unhooking movement with one rotation around said hooking/unhooking rotation axis, a shape of said eternal profile enabling each of said hooks (8, 9) to rotate around said hooking/unhooking rotation axis according to said hooking direction under the action of forces exerted by said wheel (30) on said abutment (2), and
- said rotating shaft (5) is adapted to cooperate with said base structure (1) by interposing elastic means loaded with elastic energy when said rotating shaft (5) is rotated around said hooking/unhooking rotation axis according to said unhooking direction (S) and to discharge said energy when said rotating shaft (5) rotates around said hooking/unhooking rotation axis according to said hooking direction (A).

2. Grip wedge (20) according to claim 1, **characterised in that** each hook (8, 9) is provided with one driving handle (12, 13) to assist the rotation of said rotating shaft (5) around said hooking/unhooking rotation axis.

3. Grip wedge (20) according to claim 1, **characterised in that** said elastic means are at least one torsion spring (15) arranged coaxially with said rotating shaft (5) having one first end fixed to said shaft (5) and one second end fixed to said base structure (1).

4. Grip wedge (20) according to any one of the preceding claims, **characterised in that** it is provided with elastic, rubber anti-vibration elements interposed between said base structure (1) and said loading platform or gangway (40).

5. Grip wedge (20) according to claim 4, **characterised in that** said anti-vibration elements are rubber anti-vibration pins (16, 17).

## Patentansprüche

1. Unterlegkeil (20) für Fahrzeuge auf Kraftfahrzeugen oder Autotransportern, der aus mindestens einer Grundstruktur (1) besteht, auf der ein Anschlag (2) für ein Rad (30) des genannten Fahrzeuges befestigt ist, der genannte Keil (20) ist mit Schnellkupplungs-/-lockerungsvorrichtungen an einer Ebene oder einer Ladespur (40) des Autotransporters ausgestattet, die genannten Schnellkupplungs-/-Iockerungsvorrichtungen dienen dazu, durch die Bewegung von nur einer Hand aktiviert zu werden, die genannten Schnellkupplungs-/- lockerungsvorrichtungen bestehen aus Sperrvorrichtungen, die mindestens zwei Haken (8, 9) einschließen, welche längs derselben Drehachse der Befestigung/Lockerung parallel zu einer Achse des genannten Rades (30) angeordnet sind, um gleichzeitig mit der genannten einzelnen Bewegung von nur einer Hand manövriert zu werden, wobei sie sich gemäß einer Befestigungsrichtung (A) und einer Lockerungsrichtung (S), die entgegen gesetzt zur Befestigungsrichtung (A) ist, drehen, die genannten Haken (8, 9) sind auf mindestens einer Drehwelle (5) befestigt, die koaxial zur genannten Drehachse der Befestigung/Lockerung ist, und **dadurch gekennzeichnet ist, dass**:
- die genannte Drehwelle (5) auf der genannten Grundstruktur (1) in ihren beiden entgegen gesetzten Endstücken von einer entsprechenden Halterung (6, 7) verbunden und getragen wird, welche dazu dient, eine Drehung der genannten Drehwelle (5) um die genannte Drehachse der Befestigung/Lockerung zu ermöglichen;
- jeder der genannten Haken (8, 9) mit einem externen Profil ausgestattet ist, das dazu dient, seine Befestigungs-/Lockerungsbewegung mit einer Drehung um die genannte Drehachse der Befestigung/Lockerung zu ermöglichen, eine Form des genannten externen Profils ermöglicht jedem der genannten Haken (8, 9), sich unter der Wirkung der Kräfte, die vom genannten Rad (30) auf den genannten Anschlag (2) ausgeübt werden, gemäß der genannten Befestigungsrichtung um die genannte Drehachse der Befestigung/Lockerung zu drehen, und
- die genannte Drehwelle (5) dazu dient, mit der genannten Grundstruktur (1) durch Dazwischenlegen von elastischen Vorrichtungen zusammenzuarbeiten, die durch eine elastische Energie geladen werden, wenn die genannte Drehwelle (5) gemäß der genannten Lockerungsrichtung (S) um die genannte Drehachse der Befestigung/Lockerung gedreht wird, und die genannte Energie zu entladen, wenn sich die genannte Drehwelle (5) gemäß der genannten Befestigungsrichtung (A) um die genannte Drehachse der Befestigung/Lockerung dreht.

2. Keil (20) gemäß Patentanspruch 1, der **dadurch gekennzeichnet ist, dass** jeder Haken (8, 9) mit einem Aktivierungsgriff (12, 13) ausgestattet ist, der dazu dient, die genannte Drehung der genannten Drehwelle (5) um die genannte Drehachse der Befestigung/Lockerung zu unterstützen.

3. Keil (20) gemäß Patentanspruch 1, der **dadurch gekennzeichnet ist, dass** die genannten elastischen Vorrichtungen aus mindestens einer Torsionsfeder (15) bestehen, die koaxial zur genannten Drehwelle (5) angeordnet ist und deren erstes Endstück an der genannten Drehwelle (5) befestigt ist, und deren zweites Endstück an der genannten Grundstruktur (1) befestigt ist.

4. Keil (20) gemäß einem beliebigen der vorhergehenden Patentansprüche, der **dadurch gekennzeichnet ist, dass** er mit elastischen Antivibrationselementen aus Gummi ausgestattet ist, die zwischen der genannten Grundstruktur (1) und der genannten Ebene oder Ladespur (40) angebracht werden.

5. Keil (20) gemäß Patentanspruch 4, der **dadurch gekennzeichnet ist, dass** die genannten Antivibrationselemente Antivibrationsblöcke aus Gummi (16, 17) sind.

## Revendications

1. Cale (20) d'arrêt pour véhicules automobiles sur des véhicules à moteur ou porte-voitures, composée d'au moins une structure de base (1) sur laquelle est fixée une rencontre (2) d'arrêt d'une roue (30) dudit véhicule automobile, ladite cale (20) étant dotée de moyens d'accrochage/décrochage rapide à un plan ou à une voie de chargement (40) du porte-voiture, lesdits moyens d'accrochage/décrochage rapide étant aptes à être actionnés au moyen du seul mouvement d'une main, lesdits moyens d'accrochage/décrochage rapide sont composés d'harpons comprenant au moins deux crochets (8, 9) disposés le long d'un même axe de rotation d'accrochage/décrochage parallèle à un axe de ladite roue (30) pour être manoeuvrés simultanément avec le simple mouvement d'une main, en tournant autour dudit axe de rotation d'accrochage/décrochage selon un sens d'accrochage (A) et un sens de décrochage (S) opposé au dit sens d'accrochage (A), lesdits crochets (8, 9) étant fixés sur au moins un arbre rotatif (5) coaxial audit axe de rotation d'accrochage/décrochage, **caractérisé par le fait que**:
- Ledit arbre rotatif (5) est raccordé et soutenu sur ladite structure de base (1) sur ses deux extrémités opposées par un support respectif (6, 7) apte à permettre une rotation dudit arbre rotatif (5) autour dudit axe de rotation d' accrochage/décrochage;
- chacun desdits crochets (8, 9) est doté d'un profil externe apte à en permettre un mouvement d'accrochage/décrochage avec une rotation autour dudit axe de rotation d'accrochage/décrochage, une forme dudit profil externe en permettant à chacun desdits crochets (8, 9) de tourner autour dudit axe de rotation d'accrochage/décrochage selon ledit sens d'accrochage sous l'action des forces exercées par ladite roue (30) sur ladite rencontre (2), et
- ledit arbre rotatif (5) est apte à coopérer avec ladite structure de base (1) au moyen de l'interposition de moyens élastiques chargés d'énergie élastique quand ledit arbre rotatif (5) est placé en rotation autour dudit axe de rotation d'accrochage/décrochage selon ledit sens de décrochage (S) et à décharger ladite énergie quand ledit arbre rotatif (5) est en rotation autour dudit axe de rotation d'accrochage/décrochage selon ledit sens d'accrochage (A).

2. Cale (20) selon la revendication 1, **caractérisée par le fait que** chaque crochet (8, 9) est doté d'une poignée d'actionnement (12, 13) apte à faciliter ladite rotation dudit arbre rotatif (5) autour dudit axe de rotation d'accrochage/décrochage.

3. Cale (20) selon la revendication 1, **caractérisé par le fait que** lesdits moyens élastiques sont au moins un ressort de torsion (15) disposé en mode coaxial audit arbre rotatif (5) ayant une première extrémité fixée audit arbre (5) et une seconde extrémité fixée à ladite structure de base (1).

4. Cale (20) selon une quelconque des revendications précédentes, **caractérisée par le fait que** d'être doté d'éléments anti-vibration élastiques en caoutchouc interposés entre ladite structure de base (1) et ledit plan ou voie de chargement (40).

5. Cale (20) selon la revendication 4, **caractérisée par le fait que** lesdits éléments anti-vibration sont des tasseaux anti-vibration en caoutchouc (16, 17).
